# EUROPÄISCHE PATENTSCHRIFT

(11) **EP 1 100 715 B1**
(45) Veröffentlichungstag und Bekanntmachung des Hinweises auf die Patenterteilung: **23.01.2002**
(21) Anmeldenummer: 99931251.5
(22) Anmeldetag: 06.07.1999
(51) Int. Cl.: B62D 65/00

(54) **FLEXIBLE ARBEITSSTATION UND BETRIEBSVERFAHREN**
FLEXIBLE WORKSTATION AND OPERATING METHOD
STATION DE TRAVAIL FLEXIBLE ET PROCEDE D'EXPLOITATION

(30) Priorität: 31.07.1998 DE 29813669 U
(43) Veröffentlichungstag der Anmeldung: 23.05.2001
(73) Patentinhaber: KUKA Schweissanlagen GmbH, 86165 Augsburg (DE)
(72) Erfinder: MAYR, Georg, D-86573 Obergriesbach (DE); STEDELE, Martin, D-86150 Augsburg (DE)
(74) Vertreter: Ernicke, Hans-Dieter, Dipl.-Ing.
(86) Internationale Anmeldenummer: EP9904688
(87) Internationale Veröffentlichungsnummer: WO0007870

(56) Entgegenhaltungen:
- EP-A- 0 579 160
- EP-A- 0 582 117

## Beschreibung

Die Erfindung betrifft eine flexible Arbeitsstation und ein Betriebsverfahren mit den Merkmalen im Verfahrens- und Vorrichtungshauptanspruch.

Aus der Praxis sind flexible Arbeitsstationen für Fahrzeug-Rohkarosserien in Transferstraßen bekannt, bei denen über eine Bauteilzuführung unterschiedliche Bauteiltypen für unterschiedliche Fahrzeugmodelle im freien Mix zugeführt werden. Bei einem Bauteilwechsel wird die Spanneinrichtung ausgetauscht, die aus Wechselrahmen beidseits der Transferlinie besteht. Derartige Arbeitsstationen sind als sog. Framingstationen konzipiert, in denen die Rohkarosserie nach und nach aus der Bodengruppe, den Front- und Seitenteilen sowie dem Dach aufgebaut und geschweißt wird.

Für die Herstellung dieser Karosserieteile sind ebenfalls Arbeitsstationen vorgesehen, die typbezogen sind. Hier werden Werkstück-Untergruppen zu Hauptgruppen gefügt und geschweißt. Diese Arten von Arbeitsstationen sind nur auf einen Bauteiltyp ausgerichtet. Soll die Produktion eines Fahrzeugmodells durch die Produktion eines anderen Modells abgelöst werden, ist ein Umbau der vorhandenen Arbeitsstation oder der Aufbau einer zweiten Arbeitsstation erforderlich. Dies bringt im ersten Fall einen Produktionsausfall während der Umbauzeit und einen reduzierten Ausstoß während der Hochlauf-Phase mit sich. Der Aufbau einer zweiten Anlage ist kosten- und bauaufwendig. Neben den modellbezogenen Anlagenkomponenten müssen auch sämtliche bauteil- bzw. modellneutralen Anlagenkomponenten müssen neu beschafft werden. Zudem muß auch eine ausreichende Freifläche für die zweite Anlage vorhanden sein. Für die zweite Anlage bedarf es einer Komplett-Inbetriebnahme und einer Anbindung der neuen Anlage an den bestehenden Materialfluß. Soll innerhalb der bekannten Arbeitsstation eine kombinierte Produktion zweier verschiedener Modelle erfolgen, ist ein Umrüstvorgang erforderlich. Dieser bringt einen Produktionsausfall während des Umrüstvorgangs mit sich und erlaubt nur ein eingeschränktes Werkstückspektrum. Geht bei einem Fahrzeugmodell die benötigte Stückzahl zurück, führt dies bei der bekannten Arbeitsstation zu einer Erhöhung der Taktzeit oder einer Reduzierung der Arbeitszeit, was beides den Nutzungsgrad der Anlage reduziert und damit die Rentabilität der Investition vermindert.

Es ist daher Aufgabe der vorliegenden Erfindung, eine bessere und flexible Arbeitsstation anzugeben.

Die Erfindung löst diese Aufgabe mit den Merkmalen im Hauptanspruch.
Die erfindungsgemäße Arbeitsstation bietet eine hohe Flexibilität und erlaubt, zwei oder mehr Typen von Bauteilen im freien Mix zu bearbeiten.

Die erfindungsgemäße Arbeitsstation kann zunächst als Einzelstation für ein Fahrzeugmodell und ein typbezogenes Bauteil geliefert werden, wobei die Flexibilitätskomponenten bereits vorhanden sind.

Soll die Produktion eines Fahrzeugmodells durch die Produktion eines anderen Modells abgelöst werden, weist die erfindungsgemäße Arbeitsstation folgende Vorteile auf: Die modellspezifischen Anlagenkomponenten für Bauteile neuer Fahrzeugmodelle können parallel zur laufenden Produktion vorbereitet werden. Die entsprechenden Tryout-Phasen sind in produktionsfreien Zeiten möglich. Eine Vorserien-Produktion kann im Wechsel zur laufenden Produktion stattfinden. Eine Hochlaufphase ist entbehrlich, so daß es keine Reduzierung des Anlagenausstoßes mehr gibt. Nach Auslauf des ursprünglich produzierten Modells können die entsprechenden modellspezifischen Anlagenkomponenten in produktionsfreien Zeiten schnell aus der Anlage entfernt werden.

Von weiterem Vorteil ist, das die bauteilneutralen Anlagenelemente vollständig weiterverwendet werden können. Umfangreiche Freiflächen für eine komplette zweite Anlage sind nicht mehr erforderlich. Ebenso ist keine Komplett-Inbetriebnahme mehr erforderlich. Eine erneute Anbindung einer zweiten Anlage an einen bestehenden Materialfluß kann ebenfalls entfallen.

Die erfindungsgemäße Arbeitsstation erlaubt darüber hinaus eine Bearbeitung von Bauteilen zweier Fahrzeugmodelle im freien Mix. Dies ist besonders bei Modellen mit niedriger Produktionsstückzahl von Vorteil, da über eine Anlage zwei oder mehr Modelle produziert werden können. Sollte die Stückzahl eines Modells zurückgehen, kann ein zusätzliches Modell auf der gleichen Anlage gefahren werden. Zum Wechsel der Produktion zwischen diesen beiden Modellen ist kein Umbau erforderlich. Produktionsausfall wird vermieden.

Die beiden zu produzierenden Modelle können schnell durch andere, bereits integrierte Modelle ersetzt werden. Außerdem ist ein breites Werkstückspektrum möglich. Von besonderem Vorteil bei einem Mix-Betrieb ist es, daß die Greiferablagen für die typbezogenen Greiferwerkzeuge auf den Bauteilen vorgesehen sind, die sich auf der Positioniereinrichtung und/oder der Bauteilzuführung befinden. Die Nebenzeiten für einen Greiferwechsel werden dadurch erheblich reduziert.

Bei einem Modellwechsel wird das Greifwerkzeug auf dem als nächstes zu bearbeitenden Bauteil vom alten Typ abgelegt (in der Arbeitsstation oder in der Bauteilzuführung). Bei einem erneuten Modellwechsel wird dieses Bauteil als erstes bearbeitet. Dadurch kann der Modellwechsel schneller vonstatten gehen.

Die erfindungsgemäße Arbeitsstation erlaubt die Anpassung der Vorgänge an verschiedene Taktzeiten, wobei auch kurze Taktzeiten möglich sind.

Von Vorteil ist ferner, daß das Stationenkonzept unabhängig von Spezifikationen der Kunden und Anlagenbetreiber anwendbar ist. Für die Planung neuer Anlagen ist der modulare Charakter der Arbeitsstationen von Vorteil. Für die Betriebssicherheit ist der modulare Aufbau der Stationselemente aus praxiserprobten Komponenten von Vorteil.

Weitere vorteilhafte Ausgestaltungen ergeben sich aus den Unteransprüchen.

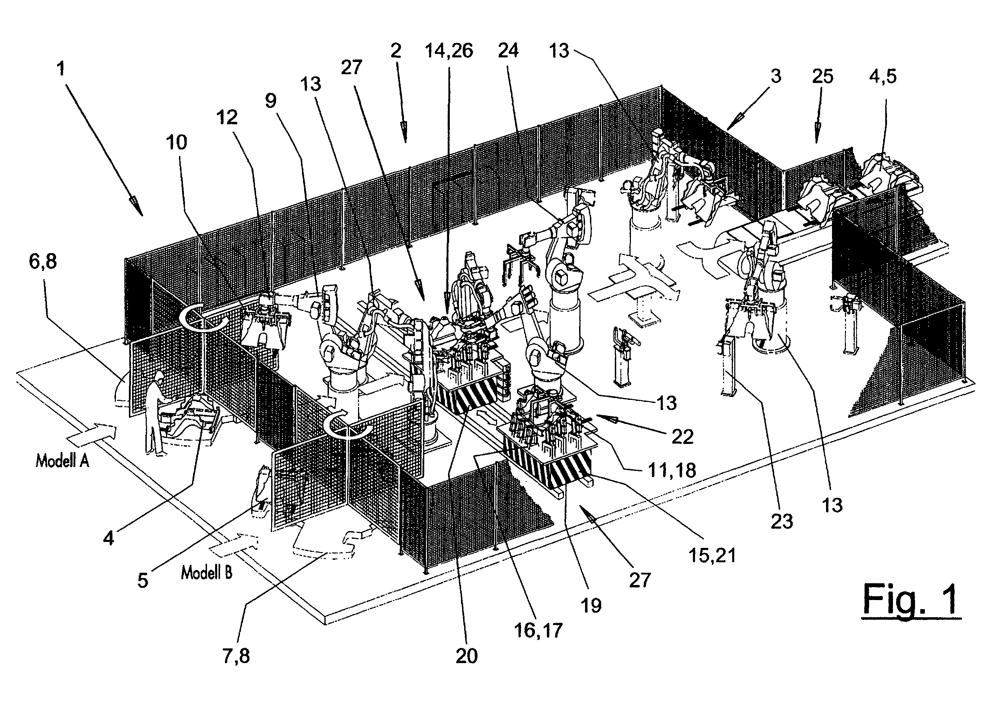

Die Erfindung ist in der Zeichnung Figur 1 schematisch dargestellt. Sie zeigt in einer perspektivischen Ansicht eine flexible Arbeitsstation.

Die Arbeitsstation (1) ist als Zelle gestaltet und zur Bearbeitung von zwei oder mehr unterschiedlichen Bauteiltypen (4,5) vorgesehen. Die Bauteile sind vorzugsweise Teile einer Fahrzeugkarosserie. Die unterschiedlichen Bauteiltypen (4,5) gehören zu zwei unterschiedlichen Fahrzeugmodellen A und B. In der Arbeitsstation (1) findet vorzugsweise ein Fügen und Geometrieschweißen von Bauteil-Untergruppen, die aus Einzelteilen und/oder vorgefügten Komponenten bestehen, zu sogenannten Hauptgruppen statt. Im gezeigten Ausführungsbeispiel werden aus verschiedenen Blechen bestehende Motorräume gefügt und geschweißt.

Die Arbeitsstation (1) besitzt mindestens einen flexiblen Bearbeitungsplatz (2), an dem die unterschiedlichen Bauteile (4,5) im freien Mix bearbeitet werden können. Die Bauteile (4,5) werden über zwei getrennte und vorzugsweise nebeneinander oder alternativ übereinander angeordnete Bauteilzuführungen (6,7) zugeführt und mit einer Transportvorrichtung (9), die vorzugsweise als mehrachsiger Transportroboter ausgebildet ist, zum Bearbeitungsplatz (2) gebracht. Eine weitere Transportvorrichtung (24), die wiederum vorzugsweise als Transportroboter ausgebildet ist, transportiert die bearbeiteten Bauteile (4,5) gegebenenfalls zu einem weiteren Bearbeitungsplatz (3). Hieran können sich weitere Bearbeitungsplätze oder eine Bauteilabgabe (25) zum Ausschleusen der Bauteile (4,5) anschließen.

Die Bauteilzuführungen (6,7) können in beliebig geeigneter Weise ausgebildet sein. Sie sind für jeweils einen Bauteiltyp (4,5) konzipiert und haben mindestens eine entsprechende typbezogene Zuführauflage (8), auf der die Bauteile (4,5) außerhalb der Arbeitsstation (1) von einem Werker oder einer Übergabevorrichtung abgelegt und dann in die Arbeitsstation (1) gebracht werden können. In der gezeigten Ausführungsform ist die Zuführauflage (8) als Drehtisch mit vier Auflageplätzen und dazwischenliegenden schützenden Trenngittern ausgebildet.

Der flexible Bearbeitungsplatz (2) dient zur abwechselnden Bearbeitung der unterschiedlichen Bauteile (4,5). Er hat eine der Typenzahl entsprechende Zahl von beweglichen Positioniervorrichtungen (14,15). In der gezeigten Ausführungsform sind zwei Positioniervorrichtungen (14,15) vorhanden. Diese besitzen jeweils eine Bewegungseinheit (20,21), die beispielsweise als flurgebundener Transportwagen ausgebildet ist. Die Bewegungseinheiten (20,21) sind miteinander mechanisch oder steuertechnisch gekoppelt und können sich gemeinsam bewegen.

Die Positioniervorrichtungen (14,15) sind typbezogen und jeweils für eines der Bauteile (4,5) ausgebildet. Sie tragen jeweils eine passende Bauteilaufnahme (19) und eine zugehörige Spanneinrichtung (16) für das Bauteil (4,5). Auf der Positioniervorrichtung (14,15) ist zumindest das Unterwerkzeug (17) der Spanneinrichtung (16) angeordnet. Das Oberwerkzeug (18) ist an einem Greifwerkzeug (10,11) angeordnet, worauf später noch näher eingegangen wird.

Die Positioniervorrichtungen (14,15) sind jeweils zwischen einer Arbeitsstelle (26) am Bearbeitungsplatz (2) und einer Ruhestelle (27) hin und her beweglich. In der gezeigten Ausführungsform können die Bewegungseinheiten (20,21) auf Schienen quer zur Materialflußrichtung nach links und rechts verfahren, so daß sich eine gemeinsame Arbeitsstelle (26) in der Mitte und zwei außenseitige Ruhestellen (27) ergeben. Im gezeigten Ausführungsbeispiel ist gerade die Positioniervorrichtung (14) mit ihrem Bauteil (4) an der Arbeitsstelle (26). Die andere Positioniervorrichtung (15) mit einem Bauteil (5) befindet sich in der Ruhestelle (27). Sie bildet einen Speicherplatz für das Bauteil (5). Hierauf wird nachfolgend noch näher eingegangen.

Zwischen den Bauteilzuführungen (6,7) und dem Bearbeitungsplatz (2) ist der Transportroboter (9) angeordnet. Er besitzt an der Roboterhand eine Wechselkupplung (12), an der mindestens zwei unterschiedliche und auf den Bauteiltyp bezogene Greifwerkzeuge (10,11) angeschlossen werden können. Bei einem Bauteil- oder Modellwechsel werden auch die Greifwerkzeuge (10,11) getauscht. Die Greifwerkzeuge (10,11) sind vorzugsweise als sog. Geometriegreifer ausgebildet, die zugleich auch das vorerwähnte Oberwerkzeug (18) für die Spanneinrichtung (16) bilden. Mit dem Geometriegreifer können die noch losen Einzelteile der als Untergruppe bereitgestellten Bauteile (4,5) lagegerecht gefaßt und gehalten werden. Der Transportroboter (9) nimmt die Bauteile (4,5) von der Zuführauflage (8) bzw. dem Drehtisch auf und legt sie in die Bauteilaufnahme (19) der entsprechend bereitgestellten typbezogenen Positioniervorrichtung (14,15).

Für die Greifwerkzeuge (10,11) sind zum Werkzeugwechsel Greiferablagen (22) an oder auf den Bauteilen (4,5) vorgesehen. Dies können spezielle Ablagepunkte oder sonstige geeignete Aufnahmen direkt auf den Bauteilen (4,5) sein. In der bevorzugten Ausführungsform sind die Greiferablagen (22) Bestandteil der Spanneinrichtung (16). Alternativ können die Greiferablagen (22) auch in geeigneter Ausbildung und in Zuordnung zu den Bauteilen (4,5) an der Bauteilzuführung (6,7) oder der Positioniervorrichtung (14,15) angeordnet sein.

Das am Greifwerkzeug (10,11) angeordnete Oberwerkzeug (18) ergänzt sich mit dem Unterwerkzeug (17) zur Spanneinrichtung (16) für die Bauteile (4,5). Das Unterwerkzeug (17) kann dabei die Greiferablage (22) bilden. Die Greifwerkzeuge (10,11) haben geeignete Positionier- und Anschlußelemente zur lagegenauen Koppelung des Oberwerkzeugs (18) mit dem Unterwerkzeug (17) bzw. der Bauteilaufnahme (19). Mit diesen Anschlußelementen können die Greifwerkzeuge (10,11) auch fest mit dem Unterwerkzeug (17) oder der Bauteilaufnahme (19) verbunden werden, um eine geschlossene und feste Spanneinrichtung (16) zu bilden. Das Bauteil (4,5) ist dann in der Spanneinrichtung (16) lagegenau fixiert und gespannt. Es ist dadurch auch fest mit der zugehörigen Positioniervorrichtung (14,15) verbunden.

Am Bearbeitungsplatz (2) sind mehrere Bearbeitungsvorrichtungen (13) vorhanden, die vorzugsweise als Roboter ausgebildet sind. Insbesondere kann es sich hierbei um Schweißroboter handeln, die die Einzelkomponenten der Bauteile (4,5) an vorgesehenen Stellen schweißen. Während dieses Bearbeitungsvorganges bleibt das Greifwerkzeug (10,11) am Bauteil (4,5). Am Arbeitsende löst der Transportroboter (9) sein Greifwerkzeug (10,11) vom Bauteil (4,5) und bewegt sich zur Bauteilzuführung (6,7) für die Übernahme eines neuen Bauteils (4,5) des gleichen Typs. Währenddessen übernimmt der zweite Transportroboter (24) das bearbeitete Bauteil (4,5) und bringt es auf eine Ablage am zweiten benachbarten Bearbeitungsplatz (3). Hier wird das Bauteil (4,5) von einer oder mehreren weiteren Bearbeitungsvorrichtungen (13), insbesondere Robotern übernommen und weiter bearbeitet. Hierbei können beispielsweise weitere Schweißpunkte an stationären Bearbeitungsvorrichtungen (23), insbesondere Punktschweißzangen oder dergleichen, gesetzt werden. Die Roboter (13) geben das fertige Bauteil (4,5) dann an die Bauteilabgabe (25), die z.B. als Transportband ausgebildet ist.

Im gezeigten Ausführungsbeispiel werden Bauteile (4) bearbeitet, die zum Modell A gehören. Ein Bauteil (5) für das Modell B befindet sich mit seiner Positioniervorrichtung (15) auf einem Speicherplatz an der Ruhestelle.

Wenn nun ein Bauteilwechsel stattfinden soll, bringt der Transportroboter (9) noch ein weiteres Bauteil (4) für das Modell A zum Bearbeitungsplatz (2), wo es in der Spanneinrichtung (16) wie oben beschrieben fixiert und gespannt wird. Der Transportroboter (9) öffnet die Wechselkupplung (12) und löst sich von dem Greifwerkzeug (10), das mittels der Greiferablage (22) am Bauteil (4) auf der Positioniervorrichtung (14) verbleibt. Durch die vorerwähnten Anschlußelemente ist die Lage und Verbindung des Greifwerkzeugs (10) zur Positioniervorrichtung (14) gesichert.

Das soeben geladene Bauteil (4) wird nicht mehr bearbeitet, sondern auf einen Speicherplatz bzw. auf seine Ruhestellung (27) gebracht. Zu diesem Zweck fahren die beiden Bewegungseinheiten (20,21) aus der gezeigten Position in Figur 1 nach links, wobei die Positioniervorrichtung (15) mit dem zuletzt geladenen Bauteil (5) von Modell B in die Arbeitsstelle (26) gelangt. Dieses noch nicht bearbeitete Bauteil (5) wird nun von den Bearbeitungsvorrichtungen (13) bearbeitet.

Währenddessen koppelt der Transportroboter (9) an das noch am Bauteil (5) und dessen Greiferablage (22) befindliche Greifwerkzeug (11) an und löst dieses nach abgeschlossener Bearbeitung vom Bauteil (5). Er bewegt sich zur Bauteilzuführung (7), um das nächste bereitgestellte Bauteil (5) abzuholen. Währenddessen übernimmt der zweite Transportroboter (24) das soeben bearbeitete Bauteil (5) und bringt es zum nachgeschalteten Bearbeitungsplatz (3) oder zur Bauteilabgabe (25). Dieses zwischengespeicherte Bauteil (5) bildet nun das erste Bauteil eines neuen Fertigungszyklus für das Modell B.

Bei einem Modellwechsel verbleibt das Greifwerkzeug (10,11) am zuletzt geladenen Bauteil (4,5) und der Greiferablage (22). Der Transportroboter (9) muß das Greifwerkzeug (10,11) dann nicht zu einem anderen externen Ablageplatz bringen und spart dadurch Nebenzeit ein.

Bei einem neuerlichen Modellwechsel von B nach A läuft der vorbeschriebene Vorgang umgekehrt ab. Nach dem letzten zu bearbeitenden Bauteil (5) von Modell B wird ein weiteres Bauteil B zum Bearbeitungsplatz (2) gebracht. Dort fährt es mit seiner Positioniereinrichtung (15) und dem abgelegten Greifwerkzeug (11) in die rechte Ruhestelle (27) und den Speicherplatz. Das zuletzt geladene Bauteil (4) von Modell A gelangt dadurch in die Arbeitsstelle (26), wird dort bearbeitet und bildet das erste Bauteil für einen neuen Fertigungszyklus des Modells A.

In einer Variante kann die Greiferablage (22) an oder auf einem Bauteil (4,5) vorgesehen sein, das sich noch an der Bauteilzuführung (6,7) bzw. der Zuführauflage (8) befindet. In diesem Fall löst sich beim gezeigten Ausführungsbeispiel der Transportroboter (9) mit seinem Greifwerkzeug (10) vom zuletzt bearbeiteten Bauteil (4) für das Modell A am Ende der Bearbeitung am Bearbeitungsplatz (2) und legt dann das Greifwerkzeug (10) auf dem nächsten bereitgestellten Bauteil (4) vom Modell A an der Bauteilzuführung (6) ab.

Der Transportroboter (9) bewegt sich zur anderen Bauteilzuführung (7) und dem dort bereitgestellten ersten Bauteil (5) von Modell B. Das zugehörige Greifwerkzeug (11) befindet sich auf seiner Greiferablage (22) an diesem Bauteil (5) und wird vom Transportroboter (9) angekoppelt und zum Bearbeitungsplatz (2) gebracht. Während dieser Vorgänge des Transportroboters (9) wird das zuletzt bearbeitete Bauteil (4) von Modell A vom zweiten Transportroboter (24) aus dem Bearbeitungsplatz entnommen. Anschließend wechseln die Positioniervorrichtungen (14,15) ihren Platz. In diesem Fall bilden die Positioniervorrichtungen (14,15) keinen Speicherplatz für das zuletzt geladene Bauteil (4,5) und das zugehörige Greifwerkzeug (10,11), sondern fahren leer in die Ruhestelle (27).

Abwandlungen der beschriebenen Ausführungsform sind in verschiedener Weise möglich. So kann die konstruktive Ausgestaltung und Anordnung des Bearbeitungsplatzes (2), der Bauteilzuführungen (6,7), der Greiferablagen (22) und der Positioniervorrichtungen (14,15) beliebig variieren. Für die Bauteile (4,5) kann eine gemeinsame Bauteilzuführung (6) vorhanden sein. Entsprechend der gewünschten Zahl an Modellen können auch mehr als zwei dieser typbezogenen Stationskomponenten vorhanden sein. Der zweite Bearbeitungsplatz (3) kann ebenfalls flexibel und in ähnlicher Weise wie der vorgeschaltete Bearbeitungsplatz (2) ausgebildet sein. In der gezeigten Ausführungsform sind die beiden links und rechts neben der Materialflußlinie stehenden Roboter (13) nicht typbezogen und bearbeiten beide Bauteile (4,5) für die Modelle A und B parallel. Dies erhöht die zur Verfügung stehende Taktzeit und reduziert den dafür anfallenden Transportzeitanteil. Alternativ können beide Roboter (13) auch typbezogen sein, wobei der linke Roboter (13) die Bauteile (4) zu Modell A und der rechte Roboter (13) die anderen Bauteile (5) zu Modell B bearbeitet. Dementsprechend sind auch die stationären Bearbeitungsvorrichtungen (23) mehrfach vorhanden. In einer Abwandlung der gezeigten Ausführungsform kann der zusätzliche Bearbeitungsplatz (3) auch entfallen. Desgleichen ist es möglich, mehrere weitere Bearbeitungsplätze nachzuschalten und gegebenenfalls auch Verzweigungen des Materialflusses oder Bauteilflusses vorzunehmen.

### BEZUGSZEICHENLISTE

- 1: Arbeitsstation, Zelle
- 2: Bearbeitungsplatz, flexibel
- 3: Bearbeitungsplatz
- 4: Bauteil, Modell A
- 5: Bauteil, Modell B
- 6: Bauteilzuführung
- 7: Bauteilzuführung
- 8: Zuführauflage, Drehtisch
- 9: Transportvorrichtung, Transportroboter
- 10: Greifwerkzeug, Spanngreifer
- 11: Greifwerkzeug, Spanngreifer
- 12: Wechselkupplung
- 13: Bearbeitungsvorrichtung, Schweißroboter
- 14: Positioniervorrichtung
- 15: Positioniervorrichtung
- 16: Spanneinrichtung
- 17: Unterwerkzeug
- 18: Oberwerkzeug
- 19: Bauteilaufnahme
- 20: Bewegungseinheit, Wagen
- 21: Bewegungseinheit, Wagen
- 22: Greiferablage, Ablageplatz
- 23: Bearbeitungsvorrichtung, stationär
- 24: Transportvorrichtung, Transportroboter
- 25: Bauteilabgabe
- 26: Arbeitsstelle
- 27: Ruhestelle

## Patentansprüche

1. Betriebsverfahren für eine flexible Arbeitsstation (1) zum Bearbeiten, insbesondere Fügen und Geometrieschweißen von zwei oder mehr unterschiedlichen Typen von Bauteilen (4,5), wobei die Arbeitsstation (1) mindestens eine Bauteilzuführung (6,7), mindestens einen flexiblen Bearbeitungsplatz (2) mit mehreren beweglichen, typbezogenen Positioniervorrichtungen (14,15) mit Spanneinrichtungen (16), ein oder mehrere Bearbeitungsvorrichtungen (13) und mindestens eine Transportvorrichtung (9) aufweist, die die Bauteile (4,5) mit mehreren wechselbaren typbezogenen Greifwerkzeugen (10,11) von der Bauteilzuführung (6,7) zu den Positioniervorrichtungen (14,15) transportiert, **dadurch gekennzeichnet, daß** zum Werkzeugwechsel die Greifwerkzeuge (10,11) von der Transportvorrichtung (9) auf einer Greiferablage (22) an oder auf den Bauteilen (4,5) abgelegt werden, welche sich auf der Positioniervorrichtung (14,15) und/oder auf der Bauteilzuführung (6,7) befinden.

2. Verfahren nach Anspruch 1, **dadurch gekennzeichnet, daß** bei einem Bauteilwechsel das zuletzt geladene und auf der Positioniervorrichtung (14,15) befindliche Bauteil (4,5) nicht mehr bearbeitet wird und mit dem abgelegten Greifwerkzeug (10,11) in eine Ruhestellung (27) gebracht wird.

3. Verfahren nach Anspruch 1 oder 2, **dadurch gekennzeichnet, daß** das in der Ruhestellung (27) befindliche Bauteil (4,5) bei einem neuerlichen Bauteilwechsel als erstes bearbeitet wird.

4. Flexible Arbeitsstation zum Bearbeiten, insbesondere Fügen und Geometrieschweißen von zwei oder mehr unterschiedlichen Typen von Bauteilen (4,5), bestehend aus mindestens einer Bauteilzuführung (6,7), mindestens einem flexiblen Bearbeitungsplatz (2) mit mehreren beweglichen, typbezogenen Positioniervorrichtungen (14,15) mit Spanneinrichtungen (16) sowie ein oder mehreren Bearbeitungsvorrichtungen (13) und mindestens einer Transportvorrichtung (9), die die Bauteile (4,5) von der Bauteilzuführung (6,7) zu den Positioniervorrichtungen (14,15) transportiert, wobei die Transportvorrichtung (9) mehrere wechselbare typbezogene Greifwerkzeuge (10,11) aufweist, **dadurch gekennzeichnet, daß** zum Werkzeugwechsel für die Greifwerkzeuge (10,11) ein oder mehrere Greiferablage(n) (22) an oder auf den Bauteilen (4,5) vorgesehen ist/sind, welche sich auf der Positioniervorrichtung (14,15) und/oder auf der Bauteilzuführung (6,7) befinden.

5. Arbeitsstation nach Anspruch 4, **dadurch gekennzeichnet, daß** die Greifwerkzeuge (10,11) als Geometriegreifer ausgebildet sind und ein Teil der Spanneinrichtung (15) an den Positioniervorrichtungen (14,15) bilden.

6. Arbeitsstation nach Anspruch 4 oder 5, **dadurch gekennzeichnet, daß** die Greifwerkzeuge (10,11) als Oberwerkzeug (18) der Spanneinrichtung (16) ausgebildet ist und mit einem Unterwerkzeug (17) an der Positioniervorrichtung (14,15) verbindbar ist.

7. Arbeitsstation nach Anspruch 4, 5 oder 6, **dadurch gekennzeichnet, daß** die Arbeitsstation (1) mehrere typbezogene Bauteilzuführungen (6,7) aufweist.

8. Arbeitsstation nach einem der Ansprüche 4 bis 7, **dadurch gekennzeichnet, daß** die Bauteilzuführungen (6,7) als Drehtische (8) ausgebildet sind.

9. Arbeitsstation nach einem der Ansprüche 4 bis 8, **dadurch gekennzeichnet, daß** die Transportvorrichtung (9) als mehrachsiger Industrieroboter ausgebildet und mit einer Wechselkupplung (12) für die Greifwerkzeuge (10,11) ausgerüstet ist.

10. Arbeitsstation nach einem der Ansprüche 4 bis 9, **dadurch gekennzeichnet, daß** der Bearbeitungsplatz (2,3) eine Arbeitsstelle (26) und mindestens eine Ruhestelle (27) für die Positioniervorrichtungen (14,15) aufweist.

11. Arbeitsstation nach Anspruch 10, **dadurch gekennzeichnet,daß** die Ruhestelle (27) ein Speicherplatz für das Bauteil (4,5) und das zugehörige Greifwerkzeug (10,11) ist.

12. Arbeitsstation nach einem der Ansprüche 4 bis 11, **dadurch gekennzeichnet, daß** die Positioniervorrichtungen (14,15) gekoppelte Bewegungseinheiten (19,20) aufweisen.

## Claims

1. Operating method for a flexible workstation (1) for machining, in particular joining and geometrically welding, two or more different types of components (4, 5), the workstation (1) having at least one component feeder (6, 7), at least one flexible machining area (2) with a plurality of movable, type-specific positioning apparatuses (14, 15) with clamping devices (16), one or more machining apparatuses (13) and at least one transporting apparatus (9), which transports the components (4, 5), by way of a plurality of exchangeable type-specific gripping tools (10, 11), from the component feeder (6, 7) to the positioning apparatuses (14, 15), **characterized in that**, for the tool changeover, the gripping tools (10, 11) are deposited by the transporting apparatus (9) on a gripper support (22) on the components (4, 5) located on the positioning apparatus (14, 15) and/or on the component feeder (6, 7).

2. Method according to Claim 1, **characterized in that**, in the case of the component changeover, the last-loaded component (4, 5) located on the positioning apparatus (14, 15) is no longer machined and is moved into a rest position (27) with the deposited gripping tool (10, 11).

3. Method according to Claim 1 or 2, **characterized in that** the component (4, 5) located in the rest position (27) is the first to be machined in the case of a new component changeover.

4. Flexible workstation for machining, in particular joining and geometrically welding, two or more different types of components (4, 5), comprising at least one component feeder (6, 7), at least one flexible machining area (2) with a plurality of movable, type-specific positioning apparatuses (14, 15) with clamping devices (16), as well as one or more machining apparatuses (13) and at least one transporting apparatus (9), which transports the components (4, 5) from the component feeder (6, 7) to the positioning apparatuses (14, 15), the transporting apparatus (9) having a plurality of exchangeable type-specific gripping tools (10, 11), **characterized in that**, for the tool changeover for the gripping tools (10, 11), one or more gripper supports (22) are provided on the components (4, 5) located on the positioning apparatus (14, 15) and/or on the component feeder (6, 7).

5. Workstation according to Claim 4, **characterized in that** the gripping tools (10, 11) are designed as geometric grippers and form part of the clamping device (16) on the positioning apparatuses (14, 15).

6. Workstation according to Claim 4 or 5, **characterized in that** the gripping tools (10, 11) are designed as the top tool (18) of the clamping device (16) and can be connected to a bottom tool (17) on the positioning apparatus (14, 15).

7. Workstation according to Claim 4, 5 or 6, **characterized in that** the workstation (1) has a plurality of type-specific component feeders (6, 7).

8. Workstation according to one of Claims 4 to 7, **characterized in that** the component feeders (6, 7) are designed as turntables (8).

9. Workstation according to one of Claims 4 to 8, **characterized in that** the transporting apparatus (9) is designed as a multiaxis industrial robot and is equipped with a changeover coupling (12) for the gripping tools (10, 11).

10. Workstation according to one of Claims 4 to 9, **characterized in that** the machining area (2, 3) has a working location (26) and at least one rest location (27) for the positioning apparatuses (14, 15).

11. Workstation according to Claim 10, **characterized in that** the rest position (27) is a storage area for the component (4, 5) and the associated gripping tool (10, 11).

12. Workstation according to one of Claims 4 to 11, **characterized in that** the positioning apparatuses (14, 15) have coupled movement units (19, 20).

## Revendications

1. Procédé pour faire fonctionner un poste (1) flexible de travail en vue de traiter notamment d'emboîter et de souder géométriquement deux types différents ou plusieurs types différents d'éléments (4, 5) le poste (1) de travail comprenant au moins un dispositif d'amenée (6, 7) des éléments, au moins un emplacement (2) flexible de traitement ayant plusieurs dispositifs (14, 15) mobiles de mise en position en fonction du type et munis de dispositifs (16) de blocage, un dispositif ou plusieurs dispositifs (13) de traitement et au moins un dispositif (9) de transport qui transporte les éléments (4, 5) par plusieurs outils (10, 11) de préhension en fonction du type et pouvant être remplacés du dispositif (6, 7) d'amenée des éléments aux dispositifs (14, 15) de mise en position, **caractérisé en ce que**, pour le remplacement d'outils, les outils (10, 11) de préhension sont déposés du dispositif (9) de transport à un dépôt (22) pour les dispositifs de préhension dans les éléments ou sur les éléments (4, 5), lesquels se trouvent sur le dispositif (14, 15) de mise en position et/ou sur le dispositif (6, 7) d'amenée des éléments.

2. Procédé suivant la revendication 1, **caractérisé en ce que** pour un changement d'élément, l'élément (4, 5) chargé en dernier et se trouvant sur le dispositif (14, 15) de mise en position n'est plus traité et est mis en une position (27) de repos par l'outil (10, 11) de préhension déposé.

3. Procédé suivant la revendication 1 ou 2, **caractérisé en ce que** l'élément (4, 5) se trouvant en la position (27) de repos est traité comme étant le premier lors d'un nouveau changement d'élément.

4. Poste flexible de travail destiné à traiter, notamment à emboîter et à souder géométriquement deux types différents ou plusieurs types différents d'éléments (4, 5), constitué d'au moins un dispositif (6, 7) d'amenée des éléments, d'au moins un emplacement (2) flexible de traitement ayant plusieurs dispositifs (14, 15) mobiles de mise en position en fonction du type et ayant des dispositifs (16) de blocage, ainsi qu'un dispositif ou plusieurs dispositifs (13) de traitement et au moins un dispositif (9) de transport qui transporte les éléments (4, 5) du dispositif (6, 7) d'amenée des éléments aux dispositifs (14, 15) de mise en position, le dispositif (9) de transport comportant plusieurs outils (10, 11) de préhension en fonction du type qui peuvent être remplacés, **caractérisé en ce que**, pour le changement d'outil, il est prévu, pour les outils (10, 11) de préhension, un dépôt ou plusieurs dépôts (22) d'outils de préhension dans ou sur les éléments (4, 5), lesquels se trouvent sur le dispositif (14, 15) de mise en position et/ou sur le dispositif (17) d'amenée des éléments.

5. Poste de travail suivant la revendication 4, **caractérisé en ce que** les outils (10, 11) de préhension sont constitués sous la forme de preneurs géométriques et une partie du dispositif (15) de blocage est formé sur les dispositifs (14, 15) de mise en position.

6. Poste de travail suivant la revendication 4 ou 5, **caractérisé en ce que** les outils (10, 11) de préhension sont constitués en outils (18) supérieurs du dispositif (16) de blocage et peuvent être reliés à un outil (17) inférieur sur le dispositif (14, 15) de mise en position.

7. Poste de travail suivant la revendication 4, 5 ou 6, **caractérisé en ce que** le poste (1) de travail comporte plusieurs dispositifs (6, 7) d'amenée d'éléments en fonction du type.

8. Poste de travail suivant l'une des revendications 4 à 7, **caractérisé en ce que** les dispositifs (6, 7) d'amenée d'éléments sont constitués sous la forme de plateaux (8) tournants.

9. Poste de travail suivant l'une des revendications 4 à 8, **caractérisé en ce que** le dispositif (9) de transport est constitué sous la forme d'un robot industriel à plusieurs axes et est équipé d'un accouplement (12) interchangeable pour les outils (10, 11) de préhension.

10. Poste de travail suivant l'une des revendications 4 à 9, **caractérisé en ce que** l'emplacement (2, 3) de traitement comporte une position (16) de travail et au moins une position (27) de repos pour le dispositif (14, 15) de mise en position.

11. Poste de travail suivant la revendication 10, **caractérisé en ce que** la position (27) de repos est un emplacement d'emmagasinage de l'élément (4, 5) et de l'outil (10, 11) de préhension associé.

12. Poste de travail suivant l'une des revendications 4 à 11, **caractérisé en ce que** les dispositifs (14, 15) de mise en position comportent des unités (19, 20) couplées de mise en mouvement.
